# DEMANDE DE BREVET EUROPEEN

(11) **EP 2 570 023 A1**
(43) Date de publication de la demande: **20.03.2013**
(21) Numéro de dépôt: 12184379.1
(22) Date de dépôt: 14.09.2012
(51) Int. Cl.: A01G 9/02, A01G 9/10

(54) **Pot ou godet pour la culture de plantes**

(30) Priorité: 14.09.2011 FR 1158186
(71) Demandeur: JD Transbio, 69740 Genas (FR)
(72) Inventeur: De Wismes, Julien, 38230 Chavanoz (FR)
(74) Mandataire: Vuillermoz, Bruno

(57) **Abrégé**

Godet réalisé en une matière plastique biodégradable, apte à recevoir un jeune plant ou des graines et un support de culture, constitué d'un contenant comprenant au moins une paroi de fond (2) ajourée comportant des orifices traversants (11, 13), une paroi latérale (3) et une ouverture (4) à son extrémité supérieure.

La paroi latérale (3) comporte :
• d'une part au moins une zone de faiblesse (8), présentant une épaisseur plus faible que l'épaisseur moyenne de ladite paroi latérale (3), de telle sorte que, lors de la croissance du système racinaire de la plante, lesdites racines perforent ladite zone de faiblesse (8),
• et d'autre part des saillies radiales (9), s'étendant à l'intérieur du godet depuis des embossages ajourés (10) pratiqués dans la paroi de fond (2) dudit godet, lesdits embossages ajourés (10) s'étendant à l'intérieur du godet, afin d'éviter le chignonage du système racinaire et guider les racines vers les zones de faiblesse (8) et vers les orifices traversants (11, 13) pratiqués dans la paroi de fond (2) du godet.

## Description

### DOMAINE TECHNIQUE

La présente invention concerne le domaine de l'agriculture, et plus précisément le domaine de l'horticulture, et a trait plus particulièrement à un godet ou pot ajouré destiné à recevoir un jeune plant ou des graines et un support de culture.

### ART ANTERIEUR

Dans le domaine de l'horticulture notamment, il est bien connu d'utiliser des pots ajourés, communément appelés godets ajourés dans lesquels sont introduits un support de culture tel que de la terre, du terreau ou similaire et un jeune plant, ou bouture, ou des graines.

Lorsque la ou les plantes ont atteint un stade de croissance suffisant, ladite plante est dépotée, c'est-à-dire que la plante et le support de culture (en général se présentant sous la forme d'une motte) sont retirés du godet, pour être plantée en pleine terre ou dans un pot de plus grande taille afin de poursuivre sa croissance.

Le système racinaire des jeunes plants se développant plus rapidement que la partie du végétal faisant saillie hors du support de culture, les racines se développent en s'enchevêtrant dans le godet à la manière d'un chignon malgré la présence de trous au fond du godet. Ce phénomène qui est communément appelé « chignonage », peut conduire à un dépérissement pouvant aller jusqu'à la perte de la plante.

Il convient donc de dépoter les jeunes plants avant que le « chignonage » ne soit trop important et, lors de la transplantation en pleine terre ou dans un pot de plus grande taille, l'usager doit démêler les racines pour les aérer avant de les replanter.

On comprend bien que ces opérations engendrent des pertes de temps, ce qui grève considérablement le coût de production de jeunes plants. Par ailleurs, la multiplication des manipulations des jeunes plants est susceptible d'induire une détérioration de ces derniers les rendant impropres à la vente.

De plus, après utilisation, la plupart des godets qui sont en plastique sont détériorés par les nombreuses manipulations et ne sont plus réutilisables. Ainsi, les godets ajourés en plastique sont jetés et polluent donc l'environnement.

On a de fait proposé des pots ou godets réalisés en matière biodégradable. Ce faisant, et notamment dans le cadre d'activités horticoles, il n'y a plus lieu de « dépoter » la plante et sa motte - support de croissance hors du pot, mais de positionner directement le pot muni de sa plante en terre. On gagne ainsi un temps important.

Pour autant, on se heurte également avec ce type de pot, nonobstant sa dégradation dans la terre, à des problèmes de développement de la plante, notamment en raison de poussée incorrecte du racinaire, voire même, de la difficulté pour ce dernier de sortir du pot avant la dégradation effective dudit pot.

### EXPOSE DE L'INVENTION

L'un des buts de l'invention est donc de remédier à ces inconvénients en proposant un godet ajouré de conception simple et peu onéreuse, et favorisant une croissance homogène du système racinaire des jeunes plants en évitant le phénomène de chignonage.

A cet effet, et conformément à l'invention, il est proposé un godet réalisé en matériau biodégradable, apte à recevoir un jeune plant ou des graines et un support de culture, constitué d'un contenant comprenant au moins une paroi de fond ajourée comportant des orifices traversants, une paroi latérale et une ouverture à son extrémité supérieure.

La paroi latérale du godet comporte d'une part au moins une zone dite de faiblesse présentant une épaisseur plus faible que l'épaisseur moyenne de ladite paroi latérale, de telle sorte que, lors de la croissance du système racinaire de la plante, lesdites racines perforent ladite zone de faiblesse, et d'autre part des saillies radiales s'étendant à l'intérieur du godet depuis des embossages ajourés pratiqués depuis la paroi de fond, lesdits embossages s'étendant à l'intérieur du godet, afin d'éviter le chignonage du système racinaire et guider les racines vers les zones de faiblesse et vers les orifices traversants pratiqués dans la paroi de fond du godet.

Ce faisant, on comprend bien que, contrairement aux godets de l'art antérieur, le godet selon l'invention permet une croissance harmonieuse du système racinaire du jeune plant en évitant le phénomène de chignonage de sorte que de tels godets peuvent être laissés en place lors de la transplantation des jeunes plants en pleine terre ou dans un pot de plus grande taille, limitant ainsi le nombre d'opérations manuelles lors de la transplantation, sans s'opposer à une croissance de la plante.

De préférence, chaque zone de faiblesse présente une épaisseur trois à quatre fois inférieure, voire plus à l'épaisseur moyenne de la paroi latérale.

Par ailleurs, chaque zone de faiblesse présente une forme allongée sensiblement rectangulaire et s'étendant depuis la paroi de fond jusqu'à la partie médiane de la paroi latérale du godet.

De plus, les embossages ajourés, qui forment des pieds sous le godet, présentent une forme de tétraèdre tronqué.

De manière avantageuse, les saillies radiales sont constituées d'une partie dite inférieure présentant une section trapézoïdale et s'étendant le long de la paroi latérale depuis les embossages ajourés et d'une partie dite supérieure consistant dans une paroi s'étendant perpendiculairement à la paroi latérale depuis l'extrémité supérieure de la partie inférieure. Cette forme particulière de saillie radiale permet de limiter la quantité de matière nécessaire à leur réalisation.

Accessoirement, la paroi latérale comporte des ondulations s'étendant depuis la paroi de fond jusqu'à l'ouverture du godet. Ces ondulations de la paroi latérale permettent de rigidifier ladite paroi latérale, et, par voie de conséquence, de limiter l'épaisseur de cette dernière.

Avantageusement, la matière plastique biodégradable, par exemple constituée d'acide polylactique dit PLA, comprend en outre des matières organiques, et est notamment chargée d'au moins un fertilisant organique qui est relâché lors de la décomposition de la matière plastique biodégradable, procurant ainsi un apport nutritif à la plante qui favorise sa croissance.

### DESCRIPTION SOMMAIRE DES FIGURES

D'autres avantages et caractéristiques ressortiront mieux de la description qui va suivre, de plusieurs variantes d'exécution, données à titre d'exemple non limitatifs, du godet ajouré conforme à l'invention, en référence aux dessins annexés sur lesquels :
- la figure 1 est une vue en perspective de dessus du godet biodégradable conforme à l'invention,
- la figure 2 est une vue en perspective de dessous du godet biodégradable suivant l'invention,
- la figure 3 est une vue de dessus du godet biodégradable suivant l'invention.

### DESCRIPTION DETAILLEE DE L'INVENTION

Par souci de clarté, dans la suite de l'invention, les mêmes éléments ont été désignés par les mêmes références aux différentes figures. De plus, les diverses vues ne sont pas nécessairement tracées à l'échelle.

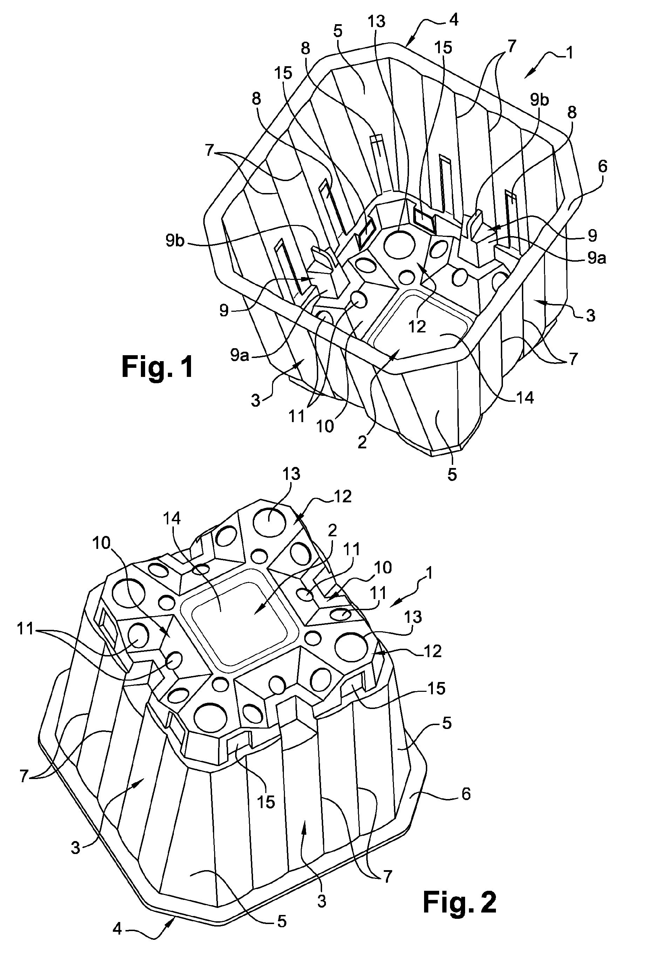

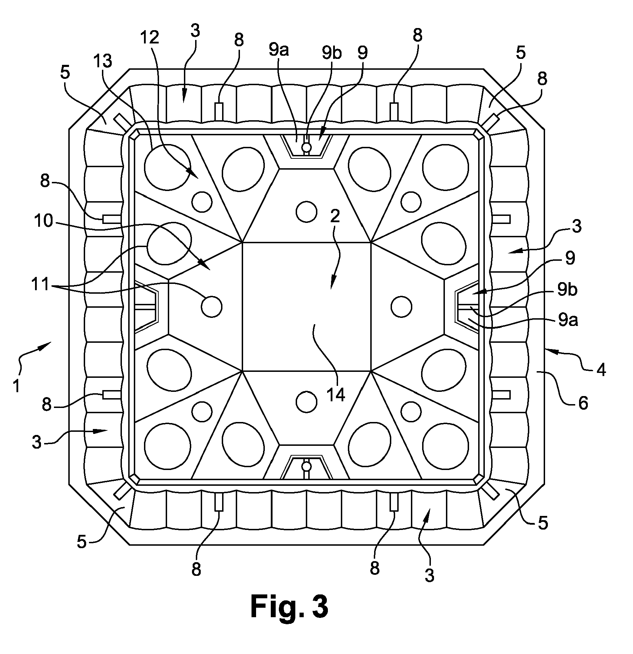

En référence aux figures 1 à 3, le godet suivant l'invention est constitué d'un contenant (1) comprenant une paroi de fond ajourée (2), quatre parois latérales (3) s'évasant légèrement depuis la paroi de fond et une ouverture (4) à son extrémité supérieure. On notera que la forme évasée des parois latérales (4) permet un gerbage aisé des godets tout en limitant le volume des godets gerbés.

De manière avantageuse, les angles entre les parois latérales (3) sont biseautés pour former des parois en biseaux (5) de telle sorte que ledit godet ne comporte pas d'arrêtes vives susceptibles de se casser.

Par ailleurs, le godet comporte à son extrémité supérieure, au niveau de son ouverture (4), une collerette périphérique (6) s'étendant vers l'extérieur depuis les extrémités supérieures des parois latérales (3) et des parois en biseaux (5). Cette collerette périphérique permet de rigidifier le godet et de le rendre mécanisable.

Afin d'améliorer la rigidité du godet, les parois latérales (3) comportent avantageusement des ondulations (7) verticales s'étendant depuis la paroi de fond jusqu'à la collerette périphérique (6), les concavités des ces ondulations (7) étant orientées vers l'intérieur du godet. Ces ondulations (7) forment ainsi des raidisseurs qui améliorent la rigidité des parois latérales (3) du godet.

Chaque paroi latérale (3) comporte une pluralité de zones dites de faiblesse (8), présentant une épaisseur plus faible que l'épaisseur moyenne de ladite paroi latérale (3) De préférence, chaque zone de faiblesse (8) présente une épaisseur trois à quatre fois inférieure à l'épaisseur moyenne de la paroi latérale (3). Dans cet exemple particulier de réalisation, chaque paroi latérale (3) présente une épaisseur moyenne d'environ 0,35 mm et chaque zone de faiblesse (8) présente une épaisseur d'environ 0,09 mm. Ces zones de faiblesse (8) présentent une forme allongée sensiblement rectangulaire, et s'étendent sensiblement depuis la paroi de fond (2) jusqu'à la partie médiane de la paroi latérale (3), entre deux ondulations (7).

Accessoirement les parois en biseaux (5) comportent également une zone de faiblesse (8) rectangulaire s'étendant sensiblement depuis la paroi de fond (2) jusqu'à la partie médiane desdites parois en biseaux (5).

On observera que ces zones de faiblesse (8) permettent aux racines, lors de la croissance du système racinaire de la plante, de poursuivre leur croissance en dehors du godet en perforant lesdites zones de faiblesse.

Par ailleurs, le godet comporte des saillies radiales (9) s'étendant à l'intérieur du godet depuis des embossages ajourés (10), comportant des orifices traversants (11) de forme sensiblement circulaires, lesdits embossages (10) étant pratiqués sur la paroi de fond dudit godet et s'étendant à l'intérieur de ce dernier. Ces embossages ajourés (10) présentent une forme de tétraèdre tronqué qui forment, entre deux embossages (10) des pieds (12) comportant des orifices traversants (13) de forme circulaire.

Ainsi la paroi de fond (2) du godet comporte une partie centrale (14) sensiblement plane et de forme carrée, et des embossages ajourés (10) aux quatre côtés de la partie centrale (14) pour former aux quatre angles de ladite partie centrale (14) des pieds (12). Accessoirement, les parois latérales (3) comportent à leur extrémité inférieure, au niveau des pieds (12) des orifices traversant (15) de forme sensiblement rectangulaire. Les orifices traversant (11), (13) et (15) de la paroi de fond (2) et respectivement des parois latérales (3) permettent le passage des racines.

Lesdites saillies radiales (9) sont constituées d'une partie dite inférieure (9a) présentant une section trapézoïdale et s'étendant le long de chaque paroi latérale (3) depuis les embossages ajourés (10), jusqu'à la partie médiane des zones de faiblesse (8), et d'une partie dite supérieure (9b) consistant dans une paroi s'étendant perpendiculairement à chaque paroi latérale (3) depuis l'extrémité supérieure de la partie inférieure (9a). Ces saillies radiales (9) permettent d'éviter le « chignonage » du système racinaire et de guider les racines vers les zones de faiblesse (8) et vers les orifices traversants (11), (13) et (15) pratiqués dans la paroi de fond (2) du godet et respectivement dans la partie inférieure des parois latérales (3) au niveau des pieds (12). Elles permettent également de garantir la régularité entre chaque collerette pour la mécanisation des produits.

Selon l'invention, le godet est réalisé par moulage par injection d'une matière plastique biodégradable. On entend par « matière plastique biodégradable » un plastique qui se décompose dans un milieu naturel aérobic, i.e. par compostage, norme EN 13432, et anaérobic, i.e. par enfouissement conformément à la norme ASTM D6400-04 par exemple.

Ladite matière plastique biodégradable consiste de préférence dans de l'acide polylactique dit PLA selon l'acronyme anglo-saxon « PolyLactic Acid ».

Toutefois, il est bien évident que le godet selon l'invention peut être obtenu dans toute matière plastique biodégradable telle que les polyhydroxyalkanoates (PHAs) tels que le poly-3-hydroixyburytate (PHB), le polyhydroxyvalerate (PHV) ou le polyhydroxyhexanoate (PHH), ou le polybutylène succinate (PBS) ou le polycaprolactone (PCL) sans pour autant sortir du cadre de l'invention.

Ainsi, le godet qui est conservé lors de la transplantation se décompose rapidement après ladite transplantation.

La matière plastique biodégradable est avantageusement chargée d'au moins un fertilisant qui est relâché lors de la décomposition de la matière plastique biodégradable procurant ainsi un apport nutritif à la plante qui favorise sa croissance.

Ledit fertilisant consiste de préférence dans un fertilisant organique obtenu selon la norme NFU 42-001, c'est-à-dire des engrais organiques comprenant de l'azote (N) et/ou du potassium (P) et/ou du calcium (K) d'origine animale et/ou végétale, tel que le fertilisant E0 7-4-7 commercialisé par la société FRAYSSINET par exemple ou d'autres types d'engrais chimiques.

Il va de soi que le godet selon l'invention peut présenter une forme quelconque telle qu'une section circulaire ou oblongue dans laquelle ledit godet ne comporte qu'une paroi latérale (3) tronconique, ou une section polygonale sans pour autant sortir du cadre de l'invention.

Enfin, il est bien évident que les exemples que l'on vient de donner ne sont que des illustrations particulières en aucun cas limitatives quant aux domaines d'application de l'invention.

## Revendications

1. Godet réalisé en une matière plastique biodégradable, apte à recevoir un jeune plant ou des graines et un support de culture, constitué d'un contenant comprenant au moins une paroi de fond (2) ajourée comportant des orifices traversants (11, 13), une paroi latérale (3) et une ouverture (4) à son extrémité supérieure, ***caractérisé* en ce que** la paroi latérale (3) comporte :
• d'une part au moins une zone dite de faiblesse (8), présentant une épaisseur plus faible que l'épaisseur moyenne de ladite paroi latérale (3), de telle sorte que, lors de la croissance du système racinaire de la plante, lesdites racines perforent ladite zone de faiblesse (8),
• et d'autre part des saillies radiales (9), s'étendant à l'intérieur du godet depuis des embossages ajourés (10) pratiqués dans la paroi de fond (2) dudit godet, lesdits embossages ajourés (10) s'étendant à l'intérieur du godet, afin d'éviter le chignonage du système racinaire et guider les racines vers les zones de faiblesse (8) et vers les orifices traversants (11, 13) pratiqués dans la paroi de fond (2) du godet.

2. Godet selon la revendication 1, ***caractérisé* en ce que** chaque zone de faiblesse (8) présente une épaisseur trois à quatre fois inférieure à l'épaisseur moyenne de la paroi latérale (3).

3. Godet selon l'une quelconque des revendications 1 ou 2, ***caractérisé* en ce que** chaque zone de faiblesse (8) présente une forme allongée sensiblement rectangulaire.

4. Godet selon l'une quelconque des revendications 1 à 3, ***caractérisé* en ce que** chaque zone de faiblesse (8) s'étend depuis la paroi de fond (2) jusqu'à la partie médiane de la paroi latérale (3).

5. Godet selon l'une quelconque des revendications 1 à 4, ***caractérisé* en ce que** les embossages ajourés (10) présentent une forme de tétraèdre tronqué.

6. Godet selon l'une quelconque des revendications 1 à 5, ***caractérisé* en ce que** les saillies radiales (9) sont constituées d'une partie dite inférieure (9a) présentant une section trapézoïdale et s'étendant le long de la paroi latérale (3) depuis les embossages ajourés (10) et d'une partie dite supérieure (9b) consistant dans une paroi s'étendant perpendiculairement à la paroi latérale (3) depuis l'extrémité supérieure de la partie inférieure (9a).

7. Godet selon l'une quelconque des revendications 1 à 6, ***caractérisé* en ce que** la paroi latérale (3) comporte des ondulations (7) s'étendant depuis la paroi de fond jusqu'à l'ouverture (4) du godet.

8. Godet selon l'une des revendications 1 à 7, ***caractérisé* en ce que** la matière plastique biodégradable consiste dans de l'acide polylactique (PLA).

9. Godet selon l'une quelconque des revendications 1 à 8, ***caractérisé* en ce que** la matière plastique biodégradable est chargée d'au moins un fertilisant organique ou chimique.
